# FASCICULE DE BREVET EUROPEEN

(11) **EP 3 456 166 B1**
(45) Date de publication et mention de la délivrance du brevet: **15.07.2020**
(21) Numéro de dépôt: 18193849.9
(22) Date de dépôt: 11.09.2018
(51) Int. Cl.: A01B 73/00, A01C 7/20, A01C 7/08, A01B 29/04

(54) **SEMOIR À TRAIN DE ROUES SUR TROIS NIVEAUX**
SÄMASCHINE MIT RÄDERN AUF DREI EBENEN ANGEORDNET
SEED DRILL WITH WHEELS ARRANGED ON THREE LEVELS

(30) Priorité: 14.09.2017 FR 1758540
(43) Date de publication de la demande: 20.03.2019
(73) Titulaire: Kuhn SAS, 67700 Saverne (FR)
(72) Inventeur: ROBINET, Mathieu, 55160 Labeuville (FR); VIRIAT, Laurent, 67440 Westhouse-Marmoutier (FR)
(74) Mandataire: Esch, Esther Evelyne

(56) Documents cités:
- EP-A1- 1 195 084
- EP-A1- 2 314 140
- EP-A1- 2 457 426
- DE-A1- 10 307 396

## Description

La présente invention se rapporte au domaine technique général du machinisme agricole et en particulier aux semoirs, par exemple aux semoirs tramés. Un semoir avec les caractéristiques du préambule de la revendication 1 est connu de EP 2 314 140. Un semoir à châssis articulé est connu de EP1 195 084.

Un semoir adapté au semis direct est décrit dans le document EP1336330. Ce semoir traîné comporte un châssis avant, un châssis arrière monté articulé au châssis avant via un pivot vertical. Le châssis avant présente une trémie à graines et deux roues, ainsi qu'un rouleau de rappui escamotable disposé entre les deux roues. Deux autres rouleaux de rappui escamotables sont prévus sur le châssis arrière, et s'étendent de part et d'autre des roues au travail comme au transport. Le châssis arrière comporte aussi une barre de semis jusqu'à laquelle un système pneumatique peut convoyer les graines.

L'invention vise à proposer une alternative améliorée à ce semoir, présentant une structure tout à la fois maniable et un rappui maîtrisé.

L'invention porte donc sur un semoir comportant :
- un châssis avant,
- un châssis arrière monté articulé au châssis avant par l'intermédiaire d'un pivot d'axe vertical,
- une trémie montée sur le châssis avant et destinée à recevoir un matériau granulaire,
- un train de roues monté sur le châssis avant et sur lequel le semoir repose dans une configuration de travail,
- une barre de semis montée sur le châssis arrière,
- un système de distribution destiné à convoyer le matériau granulaire depuis la trémie jusqu'à la barre de semis, la barre de semis étant destinée à mettre en terre des graines en provenance de la trémie,
Dans la configuration de travail du semoir, les roues du train de roues sont disposées sur au moins trois niveaux successifs d'axes distincts et transversaux à un plan médian du semoir, les trois niveaux de roues appartenant tous au châssis avant et dans lequel l'axe vertical (V) du pivot est disposé entre le plan vertical (P1) passant par l'axe (A1) du niveau de roues le plus en avant et le plan vertical (P3) passant par l'axe (A3) du niveau de roues le plus en arrière.

La disposition du train de roues sur trois niveaux présente une moindre résistance à l'avancement qu'un train de roues sur un niveau unique ou double. En effet, le bourrelet de terre qui se forme pendant le travail, à l'avant de chaque roue se repartit sur plusieurs niveaux de roues. On évite ainsi les bourrages de terre entre roues voisines.

L'appartenance de tous les niveaux de roues au châssis avant permet d'éviter le mouvement relatif des différents niveaux de roues entre eux, notamment le pivotement. Toute interférence entre les roues du train de roues est ainsi évitée.

Avantageusement, les deux roues latérales, situées de part et d'autre du train de roues par rapport à la direction d'avance de la machine, sont disposées le plus en avant au sein du train de roues, et au moins une roue centrale, préférentiellement deux pour une stabilité optimale, est disposée le plus en arrière au sein du train de roues.

Cette configuration du train de roues, dite configuration en V, dans laquelle la (ou les) roue(s) centrale(s) est (sont) en retrait selon la direction d'avance par rapport à des roues intermédiaires, elles-mêmes en retrait par rapport aux roues latérales, présente l'avantage d'éloigner les roues latérales de la barre de semis lorsque le semoir travaille en courbe par rapport à l'existant. On évite ainsi toute interférence entre le train de roues et la barre de semis lors du pivotement du châssis arrière par rapport au châssis avant.

Avantageusement, les deux roues latérales et l'au moins une roue centrale sont rétractées dans une configuration de transport. Cette structure permet de limiter l'empattement de la machine au transport et d'y améliorer la stabilité.

Avantageusement, au moins deux roues intermédiaires sont disposées selon un niveau d'axe transversal au plan médian, l'axe transversal au plan médian étant compris entre un niveau d'axe transversal avant et un niveau d'axe transversal arrière, lesdites roues intermédiaires formant roues de transport.

Cette configuration permet d'éviter d'une part que les roues latérales ne montent sur les rebords des routes, par exemple mais non limitativement en courbe, ce qui déséquilibrerait le semoir latéralement, et d'autre part qu'en cas de cahot, le semoir ne repose que sur la ou les roues centrales au risque de voir tout le poids du semoir reposer sur cette ou ces seules roues centrales et de voir la structure se déséquilibrer longitudinalement et/ou latéralement.

Selon l'invention l'axe vertical du pivot est disposé entre le plan vertical passant par l'axe du niveau de roues le plus en avant et le plan vertical passant par l'axe du niveau de roues le plus en arrière.

Avantageusement, les roues du train de roues sont disposées les unes à côté des autres, la barre de semis comportant des éléments semeurs montés les uns à côtés des autres et chacun disposés derrière une roue.

Avantageusement, les roues sont espacées régulièrement sur toute la largeur de travail. Avantageusement, les roues sont toutes de même diamètre et/ou toutes de même largeur, de préférence toutes identiques. La maîtrise du rappui est améliorée par rapport à l'existant grâce aux dimensions uniformisées des roues. Ces dernières options (même diamètre et/ou largeur) visent à limiter le nombre de pièces détachées, leurs coûts, à simplifier la maintenance et à améliorer l'homogénéité du rappui sur la largeur de la machine.

D'autres caractéristiques et avantages de l'invention se dégageront des exemples de réalisation non limitatifs de l'invention qui vont suivre et des dessins annexés dans lesquels :
- la **figure 1** est une vue de côté d'un mode de réalisation de la machine selon l'invention, en configuration de travail ;
- la **figure 2** est une vue de dessus de la machine de la figure 1, illustrée en ligne droite ; et,
- la **figure 3** est une vue de dessus de la machine illustrée en figure 1, illustrée en courbe.

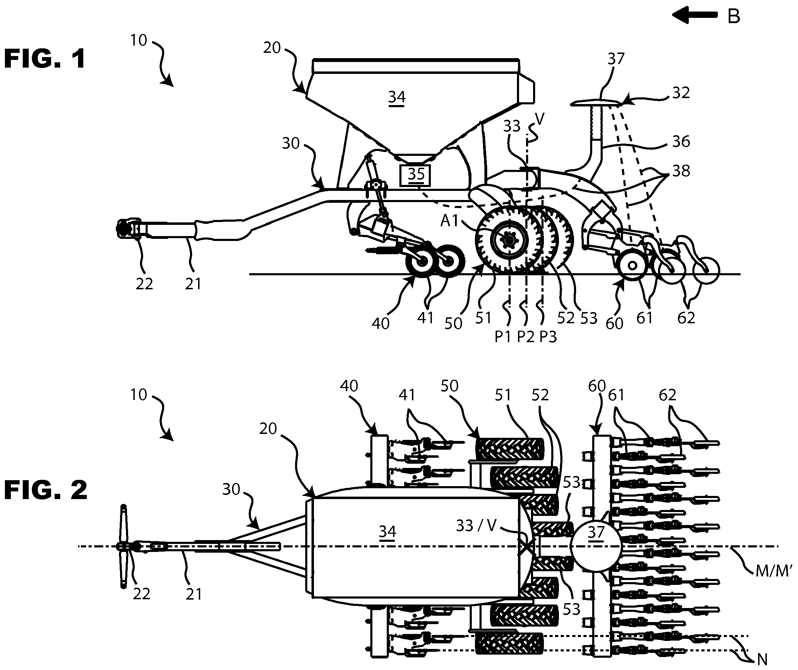

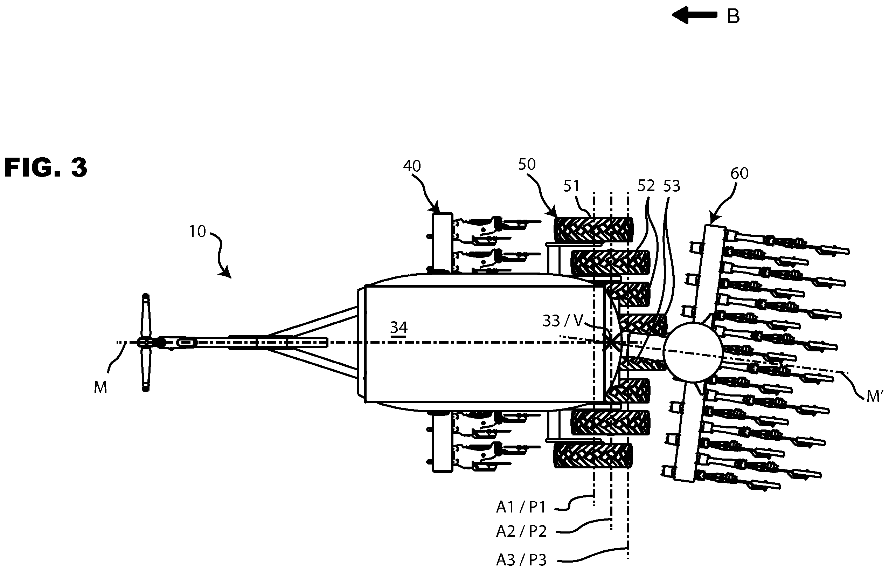

La machine agricole 10 visible en figures 1 à 3 est un semoir. Dans le mode de réalisation représenté, le semoir 10 est configuré pour le semis direct (sans préparation du sol préalable). Comme il sera vu plus loin, en variante non illustrée, la machine 10 peut être adaptée en semoir pour semis simplifié (avec préparation du sol préalable) en enlevant une barre de préparation 40. La machine 10 comporte ici un corps 20 et un timon d'attelage 21 fixé à l'avant du corps 20. La machine 10 est prévue pour semer des graines dans des rangs N parallèles entre eux. Les rangs N sont ici au nombre de seize, non limitativement. Le nombre et l'écartement des rangs peuvent par exemple différer en fonction de la variété semée, de la densité de plants souhaitée ou de la largeur de la machine. Dans ce qui suit, le terme de rang est utilisé pour désigner un alignement selon l'orientation longitudinale B de la machine 10, c'est-à-dire avant-arrière compte tenu de la direction d'avance de la machine (voir figures 1 et 3), tandis que le terme de niveau est utilisé pour désigner un alignement d'orientation transversale à la direction longitudinale B.

Le timon d'attelage 21 dispose d'une articulation avant 22 destinée à être attachée à un tracteur non illustré.

Le corps 20 comporte un châssis avant 30, un châssis arrière 31 et un système de distribution pneumatique 32. Les châssis 30 et 31 sont reliés entre eux par un pivot 33 d'axe vertical V (figure 1).

Le châssis avant 30 comporte ici une trémie 34 et un distributeur de graines 35. Le châssis avant 30 comporte ici également une barre de préparation 40 et un train de roues 50. Le châssis avant 30 est généralement orienté selon un plan médian M vertical et avant-arrière (figures 2 et 3).

Le châssis arrière 31 comporte une barre de semis 60. Le châssis arrière 31 comporte aussi en sa partie supérieure un tube vertical 36, par exemple annelé ou bosselé, également appelé cheminée, alimentant une tête de distribution 37. Le châssis arrière 31 est généralement orienté selon un plan médian M' vertical, confondu avec le plan médian M lorsque le semoir 10 est en ligne droite.

Le système de distribution pneumatique 32 regroupe le distributeur 35, la cheminée 36 et la tête de distribution 37 mentionnés ci-dessus, ainsi que divers conduits 38 (figure 1) et une soufflerie non illustrée. Le distributeur 35 est disposé en bas de la trémie 34 et est apte à doser et distribuer les graines chargées dans cette dernière.

La barre de préparation 40 du châssis avant 30 présente des disques de préparation 41, également appelés coutres (figures 1 à 3). Les coutres 41 ont ici pour fonction d'ouvrir le sol en tranchant le sol et éventuellement les débris pour permettre aux éléments semeurs 61 qui leur font suite d'ouvrir un sillon pour y insérer les graines. Dans le mode de réalisation illustré, un coutre 41 est prévu pour chaque rang N. Les coutres 41 peuvent être gaufrés, lisses, ondulés, etc. selon les usages prévus. Les coutres 41 ont un axe de rotation respectif transversal au plan médian M. Ici, l'axe de rotation des coutres 41 est perpendiculaire au plan M, bien qu'il puisse être incliné en variante non illustrée.

Le train de roues 50 présente des roues 51, 52 et 53 réparties sur toute la largeur du semoir 10. Le train de roues 50 forme organe de rappui du sol et est prévu pour garantir la profondeur de semis par la barre de semis 60 décrite ci-après. Disposer d'un train de roues qui s'étend sur toute la largeur permet d'écraser un éventuel couvert végétal et/ou limiter le tassement du sol en bout de champ et/ou permettre l'émiettement des mottes lorsque la barre de préparation 40 est absente (semis simplifié), par exemple en variantes non représentées : escamotée, retirée ou encore non prévue. La largeur et le nombre des roues 51, 52 et 53 est choisi de manière à consolider le sol pour chaque rang N semé, c'est-à-dire devant chaque élément semeur 61. Dans l'exemple représenté, les roues 51, 52 et 53 sont au nombre de huit. Préférentiellement, le semoir 10 comportera, tel que dans le mode de réalisation illustré, une roue 51, 52 et 53 pour deux rangs N. Un changement de pas impliquera alors un changement de train de roues (ex : roues plus étroites pour un pas plus faible). Le nombre de roues n'est pas limitatif et peut différer en fonction de la largeur de la machine 10 ou de l'écartement entre rangs entre autres paramètres.

La barre de semis 60 présente des éléments semeurs 61, qui sont ici sous forme de socs à disques, et des roulettes de rappui 62. Dans l'exemple illustré, pour chaque rang N, une paire de disques ouvreurs 61 et une roulette de rappui 62 sont ainsi prévus sur la barre de semis 60.

Le semoir 10 est ici non limitativement du type à triple disque par rang, ou plus simplement à triple disque. Chaque rang N (voir figure 2) présente en effet un coutre 41 et un soc à disques 61 formé de deux disques disposés en V dont la pointe est orientée vers l'avant. Grâce à la présence de ces coutres 41 qui permettent d'ouvrir le sol sans labour, le semoir 10 est ici paramétré comme un semoir pour semis direct. Comme il sera mentionné plus loin, des variantes non illustrées sont envisageables (escamotage des coutres 41 ou démontage de la barre de préparation 40 les supportant pour passage en semoir pour semis simplifié).

Le système de distribution 32 est chargé d'acheminer les graines depuis la trémie 34 jusqu'aux éléments semeurs 61. Les conduits 38 incluent au moins un conduit principal reliant la sortie du distributeur 35 à la tête de distribution 37, et des conduits de plus petits diamètres reliant les sorties de la tête de distribution 37 aux éléments semeurs 61 respectifs. Pour simplifier les figures, les conduits 38 ne sont pas détaillés, ni tous représentés.

Le chemin suivi par les graines grâce au système de distribution pneumatique 32 est le suivant : depuis la trémie 34, les graines descendent par gravité dans le distributeur de graines 35. Une soufflerie non illustrée et le conduit principal convoient les graines jusqu'à la cheminée 36 puis la tête de distribution 37. Les graines sont alors réparties par la tête de distribution 37 dans les conduits de plus petit diamètre vers la barre de semis 60 où elles sont déposées dans les rangs N, ici entre les deux disques en V. La roulette de rappui 62 presse ensuite la graine au sol de manière à assurer le contact entre la graine et la terre.

Dans la configuration de travail illustrée aux figures 1 à 3, les roues 51, 52, 53 sont disposées sur au moins trois niveaux successifs, orientés selon des axes A1, A2, A3 distincts et transversaux à un plan médian M. Les roues 51, 52 et 53 ont respectivement pour axe de rotation les axes A1, A2 et A3. Compte tenu de la direction d'avance B de la machine 10 (figure 1), les axes A1, A2 et A3 peuvent être désignés respectivement axe avant, axe intermédiaire et axe arrière. Le cas échéant, des axes intermédiaires supplémentaires portant des roues dites supplémentaires peuvent être prévus (par exemple un quatrième axe, un cinquième axe, etc. ; variantes non illustrées).

Les deux roues latérales 51, d'axe A1, c'est-à-dire situées de part et d'autre du train de roues 50 sous le semoir 10 sont disposées le plus en avant au sein du train de roues 50. A l'inverse, les deux roues centrales 53, d'axe A3, sont disposées le plus en arrière du train de roues 50. Enfin, dans le semoir 10 illustré, les deux roues intermédiaires 52 sont disposées selon un niveau d'axe A2 intermédiaire entre les niveaux A1 et A3. La disposition des roues 51, 52, 53 se fait selon un V avec une ouverture vers l'avant compte tenu de l'orientation longitudinale B et selon une vue de dessus (figure 2).

Dans l'exemple illustré, l'espacement entre niveaux successifs de roues 51, 52 et 53 est constant. Les trois niveaux de roues 51, 52 et 53 appartiennent tous au châssis avant 30. Les roues 51, 52 et 53 sont de préférence toutes de même largeur et/ou, ce qui permet d'assurer un rappui maîtrisé, homogène sur toute la largeur de travail. De préférence encore, les roues 51, 52 et 53 sont toutes identiques tel que dans le mode de réalisation illustré, ce qui limite les coûts de fabrication et facilite la maintenance. Les roues 51, 52 et 53 sont disposées les unes à côté des autres. Les roues 51, 52 et 53 sont de préférence espacées régulièrement sur toute la largeur de travail, à intervalles identiques, ce qui favorise la maniabilité.

Les socs à disques 61 sont également répartis les uns à côté des autres sur la barre de semis 60, chacun disposés derrière une roue 51, 52 et 53. Dans le mode de réalisation représenté, deux éléments semeurs 61 sont disposés dans la trace de chacune des roues 51, 52 et 53.

Dans une configuration de transport non illustrée, les deux roues latérales 51 et les roues centrales 53 sont escamotées. Les roues intermédiaires 52 forment alors roues de transport dans le mode de réalisation illustré. Cette configuration dans laquelle seules les roues intermédiaires 52 servent au transport améliore la stabilité au transport.

Dans le cas non illustré où des roues supplémentaires seraient prévues dans le train de roues 50 (axes intermédiaires supplémentaires), il est préférable que les roues supplémentaires soient disposées entre les roues intermédiaires 52 formant roues de transport et les roues centrales 53. Ainsi, l'écartement des roues intermédiaires 52 est maximal, tout en respectant le gabarit routier (la voie maximale autorisée par la législation locale).

La rétractation des roues 51 et 53 s'opère au moyen d'un ou de plusieurs vérins non représentés ici. De préférence, les roues 51 et 53 sont rétractées selon des plans verticaux parallèles au plan M. Le ou les vérin(s) permet(tent) le cas échéant d'ajuster la pression de rappui.

Selon l'invention, tel qu'illustré en figure 1, l'axe vertical V du pivot 33 est disposé entre le plan vertical P1 passant par l'axe A1 (c'est-à-dire le plan avant P1) et le plan vertical P3 passant par l'axe A3 (c'est-à-dire le plan arrière P3). L'axe V est dans le plan vertical P2 passant par l'axe A2 (c'est-à-dire le plan intermédiaire P2) et/ou à proximité immédiate de ce dernier (par exemple mais non limitativement à moins de 10 centimètres du plan intermédiaire P2).

En variante non représentée, la barre de préparation 40 est absente. En variante non représentée, les coutres 41 et/ou les socs à disques 61 sont remplacés par un organe d'ouverture de sillon d'un autre type, tel qu'un soc à simple disque, un soc à dent.

En variante, encore, le semoir comporte au moins une deuxième tête de distribution. Cette deuxième tête est par exemple utile dans le cas d'une trémie à compartiments multiples. Un premier compartiment stocke alors des graines, tandis que le deuxième peut contenir de l'engrais, de l'insecticide, une autre variété de semences, etc.

Les variantes énoncées ci-dessus peuvent faire l'objet de combinaisons.

En variante non illustrée, une rangée supplémentaire de roues de rappui est prévue à l'avant de la machine dans le but de niveler la surface du sol lorsque celui-ci a été préalablement labouré. Alternativement, un rouleau hacheur est prévu à la place de la rangée supplémentaire de roues de rappui.

## Revendications

1. Semoir comportant :
- un châssis avant (30),
- un châssis arrière (31)
- une trémie (34) montée sur le châssis avant (30) et destinée à recevoir un matériau granulaire,
- un train de roues (50) monté sur le châssis avant (30) et sur lequel le semoir repose dans une configuration de travail,
- une barre de semis (60) montée sur le châssis arrière (31)
- un système de distribution (32) destiné à convoyer le matériau granulaire depuis la trémie (34) jusqu' à la barre de semis (60), la barre de semis (60) étant destinée à mettre en terre le matériau granulaire en provenance de la trémie (34),
dans lequel, dans sa configuration de travail, des roues (51, 52, 53) du train de roues (50) sont disposées sur au moins trois niveaux successifs selon une direction d'avance (B), les trois niveaux étant d'axes (Al, A2, A3) distincts et transversaux à un plan médian (M) du semoir, les trois niveaux de roues (51, 52, 53) appartenant tous au châssis avant (30), **caractérisé en ce que** le châssis arrière (31) est monté articulé au châssis avant (30) par l'intermédiaire d'un pivot (33) d'axe vertical (V), et dans lequel l'axe vertical (V) du pivot (33) est disposé entre le plan vertical (P1) passant par l'axe (A1) du niveau de roues (51) le plus en avant et le plan vertical (P3) passant par l'axe (A3) du niveau de roues (53) le plus en arrière

2. Semoir selon la revendication 1, lesdits axes (Al, A2, A3) étant un axe avant (A1), au moins un axe intermédiaire (A2) et un axe arrière (A3), l'axe intermédiaire (A2) étant disposé entre l'axe avant (A1) et l'axe arrière (A3).

3. Semoir selon l'une des revendication précédentes, dans lequel deux roues latérales (51), situées de l'un et l'autre côté dans le train de roues (50) par rapport à la direction d'avance (B), sont disposées le plus en avant au sein du train de roues (50), et dans lequel au moins une roue centrale (53) est disposée

4. Semoir selon la revendication précédente, dans lequel les deux roues latérales (51) et une roue centrale (53) sont rétractées dans une configuration de transport.

5. Semoir selon l'une des revendications 2 à 4, au moins deux roues intermédiaires (52) étant disposées selon l'axe intermédiaire (A2) et formant roues de transport dans une configuration de transport.

6. Semoir selon la revendication 2, dans lequel l'axe vertical (V) du pivot (33) est disposé dans, ou à proximité immédiate d'un plan vertical (P2) passant par l'axe intermédiaire (A2).

7. Semoir selon l'une des revendications précédentes, les roues (51, 52, 53) du train de roues (50) sont disposées les unes à côté des autres, la barre de semis (60) comportant des éléments semeurs (61) montés les uns à côtés des autres et chacun disposés derrière une roue (51, 52, 53).

8. Semoir selon l'une des revendications précédentes, les roues (51, 52, 53) du train de roues (50) étant espacées régulièrement sur toute la largeur de travail.

9. Semoir selon l'une des revendications précédentes, les roues (51, 52, 53) du train de roues (50) étant toutes de même diamètre et/ou toutes de même largeur, préférentiellement toutes identiques.

10. Semoir selon l'une des revendications précédentes, deux éléments semeurs (61) étant disposés derrière chaque roue (51, 52, 53) du train de roues (50).

## Patentansprüche

1. Sämaschine mit:
- einem Frontrahmen (30),
- einem hinteren Rahmen (31),
- einem auf dem Frontrahmen (30) montierten Trichter (34), der dazu bestimmt ist Granulat zu enthalten,
- einem auf dem Frontrahmen (30) montierten Radsatz (50), auf welchem die Sämaschine in einer Arbeitskonfiguration aufliegt,
- einer auf dem hinteren Rahmen (31) montierten Säschiene (60)
- einem Verteilsystem (32), das dazu bestimmt ist das Granulat von dem Trichter (34) aus zu der Säschiene (30) zu befördern, wobei die Säschiene (60) dazu bestimmt ist, das von dem Trichter (34) aus erhaltene Granulat in den Boden einzubringen,
bei welcher, in ihrer Arbeitskonfiguration, Räder (51, 52, 53) des Radsatzes (50) auf mindestens drei aufeinanderfolgenden Ebenen gemäss einer Vorschubrichtung (B) angeordnet sind, wobei die drei Ebenen unterschiedliche und zu einer Mittelebene (M) der Sämaschine querlaufenden Achsen (A1, A2, A3) aufweisen, wobei die drei Räderebenen (51, 52, 53) alle dem Frontrahmen (30) angehören, ***dadurch gekennzeichnet, dass*** der hintere Rahmen (31) mittels eines Drehgelenk (33) mit einer Vertikalachse (V) an dem Frontrahmen (30) angelenkt ist, und bei welcher die Vertikalachse (V) des Drehgelenks (33) sich zwischen der die Achse (A1) der vordersten Radebene (51) durchquerenden Vertikalebene (P1) und der die Achse (A3) der hintersten Radebene (53) durchquerenden Vertikalebene (P3) befindet.

2. Sämaschine nach Anspruch 1, wobei die Achsen (A1, A2, A3) eine Vorderachse (A1), mindestens eine Zwischenachse (A2) und eine Hinterachse (A3) sind, wobei sich die Zwischenachse (A2) zwischen der Vorderachse (A1) und der Hinterachse (A3) erstreckt.

3. Sämaschine nach einem der vorhergehenden Ansprüche, bei welcher zwei Seitenräder (51), die sich beidseits in dem Radsatz (50) gemäss der Vorschubrichtung (B) befinden, am weitesten vorne innerhalb des Radsatzes (50) angeordnet sind, und bei welcher mindestens ein Mittelrad (53) am weitesten hinten innerhalb des Radsatzes (50) angeordnet ist.

4. Sämaschine nach dem vorhergehenden Anspruch, bei welcher die zwei Seitenräder (51) und das Mittelrad (53) in eine Transportkonfiguration eingefahren sind.

5. Sämaschine nach einem der Ansprüche 2 bis 4, wobei mindestens zwei Zwischenräder (52) gemäss der Zwischenachse (A2) angeordnet sind und die in einer Transportkonfiguration Transporträder bilden.

6. Sämaschine nach Anspruch 2, bei welcher die Vertikalachse (V) des Drehgelenks (33) in oder in unmittelbarer Nähe einer die Zwischenachse (A2) durchquerenden Vertikalebene (P2) angeordnet ist.

7. Sämaschine nach einem der vorhergehenden Ansprüche, die Räder (51, 52, 53) des Radsatzes (50) sind nebeneinander angeordnet, wobei die Säschiene (60) Säelemente (61) aufweist, die nebeneinander angebracht sind und jeweils hinter einem Rad (51, 52, 53) angeordnet sind.

8. Sämaschine nach einem der vorhergehenden Ansprüche, wobei die Räder (51, 52, 53) des Radsatzes (50) gleichmässig über die gesamte Arbeitsbreite beabstandet sind.

9. Sämaschine nach einem der vorhergehenden Ansprüche, wobei die Räder (51, 52, 53) des Radsatzes (50) alle den gleichen Diameter und/oder die gleiche Breite aufweisen, vorzugsweise alle gleich sind.

10. Sämaschine nach einem der vorhergehenden Ansprüche, wobei zwei Säelemente (61) hinter jedem Rad (51, 52, 53) des Radsatzes (50) angeordnet sind.

## Claims

1. Seed drill comprising:
- a front chassis (30),
- a rear chassis (31),
- a hopper (34) mounted on the front chassis (30) and intended to be filled with granulates,
- a wheel-train (50) mounted on the front chassis (30) and on which the seed drill rests in a work configuration,
- a seedbar (60) mounted on the rear chassis (31)
- a dispensing system (32) intended to transport the granulates from the hopper (34) to the seedbar (60), the seedbar (60) being intended to put the granulates coming from the hopper (34) into the ground,
in which, in its work configuration, wheels (51, 52, 53) of the wheel-train (50) are arranged on at least three successive levels in a direction of advance (B), the three levels having axes (Al, A2, A3) which are distinct and transverse to a median plane (M) of the seed drill, the three wheel (51, 52, 53) levels all belonging to the front chassis (30), ***characterised in that*** the rear chassis (31) is mounted in an articulated manner to the front chassis (30) by means of a pivot pin (33) with a vertical axis (V), and in which the vertical axis (V) of the pivot pin (33) is arranged between the vertical plane (P1) passing through the axis (A1) of the foremost wheel (51) level and the vertical plane (P3) passing through the axis (A3) of the rearmost wheel (53) level.

2. Seed drill according to claim 1, wherein the said axes (Al, A2, A3) are a front axis (A1), at least one middle axis (A2) and a rear axis (A3), the middle axis (A2) being arranged between the front axis (A1) and the rear axis (A2).

3. Seed drill according to one of the previous claims, wherein two side wheels (51) located one beside the other in the wheel-train (50) with regard to the direction of advance (B) are arranged the furthest forward in the wheel-train (50) and wherein at least one central wheel (53) is arranged the furthest back in the wheel-train (50).

4. Seed drill according to the previous claim, wherein the two side wheels (51) and a central wheel (53) are retracted to a transport configuration.

5. Seed drill according to one of claims 2 to 4, wherein two intermediate wheels (52) are arranged along the middle axis (A2) and form transport wheels in a transport configuration.

6. Seed drill according to claim 2, wherein the vertical axis (V) of the pivot pin (33) is arranged within or in close vicinity of a vertical plane (P2) passing through the middle axis (A2).

7. Seed drill according to one of the previous claims, the wheels (51, 52, 53) of the wheel-train (50) are arranged one beside the other, the seedbar (60) comprising seeder elements (61) mounted one beside the other and each being arranged behind a wheel (51, 52, 53) .

8. Seed drill according to one of the previous claims, wherein the wheels (51, 52, 53) are regularly spaced all over the entire working width.

9. Seed drill according to one of the previous claims, wherein the wheels (51, 52, 53) all have the same diameter and/or the same width, advantageously are all identical.

10. Seed drill according to one of the previous claims, wherein two seeder elements (61) are arranged behind each wheel (51, 52, 53) of the wheel-train (50).
